(19) Europäisches Patentamt
European Patent Office
Office européen des brevets

(11) EP 4 283 019 A2

(12) **EUROPEAN PATENT APPLICATION**

(43) Date of publication:
**29.11.2023 Bulletin 2023/48**

(21) Application number: **23163670.5**

(22) Date of filing: **23.03.2023**

(51) International Patent Classification (IPC):
***C25B 3/26*** *(2021.01)* ***C25B 11/052*** *(2021.01)*
***C25B 11/065*** *(2021.01)* ***C25B 11/075*** *(2021.01)*

(52) Cooperative Patent Classification (CPC):
**C25B 3/26; C25B 11/052; C25B 11/065; C25B 11/075**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.05.2022 KR 20220063508**

(71) Applicant: **SK Innovation Co., Ltd.**
**Seoul 03188 (KR)**

(72) Inventors:
- **HAN, Hyun Su**
  **34124 Daejeon (KR)**
- **IM, Ju Hwan**
  **34124 Daejeon (KR)**
- **KIM, Hee Soo**
  **34124 Daejeon (KR)**
- **SEOK, Tae Hong**
  **34124 Daejeon (KR)**
- **LEE, Seung Ok**
  **34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

# (54) SINGLE ATOMIC METAL CATALYST AND CARBON DIOXIDE CONVERSION SYSTEM USING THE SAME

(57) An electrochemical hybrid catalyst having a structure in which a nitrogen-doped carbon nanostructure (N-C) composite is loaded or decorated with two single atom transition metals indirectly linked adjacent to each other, and thus exhibits high carbon monoxide selectivity and current density at a low overpotential during reduction reaction for converting carbon dioxide into carbon monoxide, and a carbon dioxide conversion system using the same.

**Fig. 1**

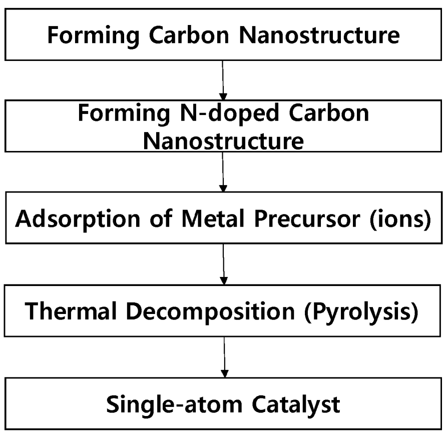


EP 4 283 019 A2

## Description

BACKGROUND OF THE INVENTION

Field of the Invention

The present disclosure relates to a single atomic metal catalyst and a carbon dioxide conversion system using the same. More particularly, the present disclosure relates to an electrochemical hybrid catalyst having a structure in which a nitrogen-doped carbon nanostructure (N-C) composite is loaded or decorated with two single atom transition metals indirectly linked adjacent to each other, and thus exhibits high carbon monoxide selectivity and current density at a low overpotential during reduction reaction for converting carbon dioxide into carbon monoxide, and a carbon dioxide conversion system using the same.

Description of the Related Art

Since the Industrial Revolution, fossil fuels have been consumed in large quantities and the world population has increased, and the amount of carbon dioxide ($CO_2$) is also increasing exponentially. Carbon dioxide arises from human industrial and economic activities and increases the greenhouse effect when discharged into an atmosphere in addition to the existing carbon cycle. This is emerging as a fatal threat to the ecosystem because it raises the temperature of the surface of the earth or lower atmosphere, causing global warming and climate change.

In response thereto, greenhouse gas reduction plans are being announced in countries around the world, and the burden related to carbon dioxide emission reduction is increasing throughout the industry. In the past, research has been mainly focused on the capture and storage of carbon dioxide. However, in an attempt to realistically contribute to the goal of "reduction of greenhouse gas emissions by 37% compared to BAU by 2030" specified in the 2015 Paris Agreement on Climate Change, various methods for recycling carbon dioxide, for instance, a technology for converting carbon dioxide into beneficial substances such as high value-added fuels or platform compounds, has been intensively researched.

To date, carbon dioxide conversion methods such as electrochemical conversion, photochemical conversion, chemical conversion using catalysts, biological conversion, and the like have been proposed. Thereamong, electrochemical conversion is (i) operable under normal temperature/pressure conditions, (ii) has a simple system and can be modulated, (iii) can increase the net reduction rate of carbon dioxide when using renewable energy, and (iv) is useful as a renewable energy storage method by conversion to high value-added chemicals. In particular, the carbon dioxide reduction reaction ($CO_2RR$) of reacting thermodynamically stable carbon dioxide with water is environmentally friendly while minimizing the emission of pollutants because it can produce various organic compounds. As such, high value-added chemicals and fuels produced by the carbon dioxide reduction reaction are regarded as promising solutions for commercialscale carbon cycles, energy crises, and environmental pollution.

Nevertheless, limitations of previously researched electrochemical carbon dioxide reduction processes have been pointed out due to low reaction rates, distribution of various products (decreased selectivity), occurrence of competing reactions such as hydrogen generation reaction (HER), and the like. In order to overcome these technical barriers, an electrochemical catalyst for carbon dioxide reduction reaction having higher catalytic activity and efficiency is required. Previous studies have proposed various electrochemical carbon dioxide conversion catalysts. As an example, metal-free catalysts, metal-based catalysts, and metal-organic framework (MOF)-based catalysts that provide high activity and selectivity are known. In particular, it has been reported that noble metal catalysts, such as gold (Au) and silver (Ag), among metal catalysts, yield excellent results in terms of current density and Faraday efficiency for carbon monoxide.

However, catalysts, in which metals are dispersed (or decorated) in a single atom size, that is, single atom catalysts (SACs), have recently attracted a great deal of attention since noble metal catalysts are disadvantageous in terms of commercial application due to the use of expensive noble metals. Single atom catalysts can reduce the size of metal active sites to atomic levels below the nanoscale to maximize carbon dioxide conversion activity and replace expensive noble metals with relatively inexpensive transition metals. In particular, single atom catalysts have an extremely simplified and ideal structure, thus being advantageously suitable to perform related research by simulating theoretical results obtained through computational science (J. Phys. Chem. C, 2013, 117, 9187-9195; Angew. Chem. Int. Ed., 2015, 54, 10758-10762, etc.). Nonetheless, in single atom-sized metal catalysts, atoms tend to aggregate to form particles. For this reason, it is difficult to commercially synthesize stable single atom catalysts and synthesis thereof involves a high-cost and complicated process, which serves as an obstacle to use in various fields. In particular, the structural simplicity of the single atom active site limits an increase in catalytic efficiency of the carbon dioxide reduction process involving multi-step proton-electron transfer.

In an attempt to solve these problems, carbon-based metal-nitrogen (M-N) catalysts providing single atom transition metal active sites have been developed, which have low cost, a controllable structure, high activity and stability,

and can promote formation of active sites and catalytic mechanisms through excellent coordination environment.

Currently, it is known that nickel (Ni) single atom catalysts can effectively replace noble metal catalysts because they exhibit high activity and selectivity for carbon monoxide in the carbon dioxide conversion reaction. However, a large amount of energy (high overpotential) is required to achieve high Faraday efficiency.

Therefore, there is a need for methods for adjusting the electronic structure of single atom catalysts to improve the carbon dioxide conversion performance of conventional single atom catalysts.

SUMMARY OF THE INVENTION

An embodiment according to the present disclosure provides a transition metal single atom catalyst capable of improving price competitiveness while providing excellent carbon dioxide conversion activity compared to commercial noble metal catalysts (e.g., Ag/C) and an electrochemical electrode including the same.

An embodiment according to the present disclosure provides a carbon dioxide conversion system capable of effectively removing carbon dioxide from flue gas discharged from power plants, steel mills, and the like using a catalyst that has higher carbon dioxide conversion activity and higher selectivity for carbon monoxide than the prior art.

In accordance with a first aspect of the present disclosure, provided is an electrochemical catalyst, which comprises:

a nitrogen-doped carbon nanostructure; and
a first transition metal ($M_1$) and a second transition metal ($M_2$) in the form of single atoms loaded in the nitrogen-doped carbon nanostructure,
wherein the electrochemical catalyst comprises an $M_1$-$N_x$ moiety and an $M_2$-$N_x$ moiety having a structure in which the first transition metal ($M_1$) and the second transition metal ($M_2$) are each bonded to a nitrogen atom of the nitrogen-doped carbon nanostructure (wherein $N_x$ represents a nitrogen atom having coordination ability), and
wherein the first transition metal ($M_1$) and the second transition metal ($M_2$) are indirectly linked to each other.

In an embodiment, the first transition metal ($M_1$) and the second transition metal ($M_2$) may form a linkage of $M_1$-$N_x$-$N_x$-$M_2$ in which the $M_1$-$N_x$ moiety is linked to the $M_2$-$N_x$ moiety.

In an embodiment, the first transition metal ($M_1$) may be nickel (Ni) and the second transition metal ($M_2$) may be manganese (Mn).

In accordance with a second aspect of the present disclosure, provided is a method of preparing an electrochemical catalyst, which comprises:

a) thermally decomposing a carbon precursor under an inert atmosphere at a first heat treatment temperature to prepare porous carbon;
b) bringing into contact the porous carbon with a nitrogen source to form a nitrogen source-porous carbon composite;
c) adsorbing a precursor of a first transition metal ($M_1$) and a precursor of a second transition metal ($M_2$) onto the nitrogen source-porous carbon composite; and
d) thermally decomposing the nitrogen source-porous carbon composite on which the first transition metal ($M_1$) and the second transition metal ($M_2$) are adsorbed under an inert atmosphere at a second heat treatment temperature, to load the first transition metal ($M_1$) and the second transition metal ($M_2$) in the form of single atoms in the nitrogen-doped carbon nanostructure,

wherein the electrochemical catalyst comprises an $M_1$-$N_x$ moiety and an $M_2$-$N_x$ moiety having a structure in which the first transition metal ($M_1$) and the second transition metal ($M_2$) are each bonded to a nitrogen atom of the nitrogen-doped carbon nanostructure (wherein $N_x$ represents a nitrogen atom having coordination ability), and
wherein the first transition metal ($M_1$) and the second transition metal ($M_2$) are indirectly linked to each other.

In accordance with a third aspect of the present disclosure, provided is an electrode for carbon dioxide reduction, which comprises:

an electrode substrate; and
a single atomic metal catalyst loaded on the electrode substrate,
wherein the single atomic metal catalyst is an electrochemical catalyst comprising: (i) a nitrogen-doped carbon nanostructure, and (ii) a first transition metal ($M_1$) and a second transition metal ($M_2$) in the form of single atoms loaded in the nitrogen-doped carbon nanostructure,
wherein the electrochemical catalyst comprises an $M_1$-$N_x$ moiety and an $M_2$-$N_x$ moiety having a structure in which the first transition metal ($M_1$) and the second transition metal ($M_2$) are each bonded to a nitrogen atom of the nitrogen-doped carbon nanostructure (wherein $N_x$ represents a nitrogen atom having coordination ability), and wherein $M_1$ and $M_2$ are indirectly linked to each other.

In an exemplary embodiment, an amount of the bimetallic single atom catalyst loaded in the electrode may be within a range of 0.2 to 5 mg/cm$^2$.

In accordance with a fourth aspect of the present disclosure, provided is a carbon dioxide reduction system, which comprises:

an anode and a cathode as electrochemical electrodes electrically connected to an external power source, and an aqueous electrolyte filled between the anode and the cathode,
wherein, upon application of a voltage from the external power source, oxygen is generated at the anode and carbon monoxide is generated at the cathode,
wherein the cathode comprises a single atomic metal catalyst loaded on an electrode substrate, and the single atomic metal catalyst comprises (i) a nitrogen-doped carbon nanostructure, and (ii) a first transition metal ($M_1$) and a second transition metal ($M_2$) in the form of single atoms loaded in the nitrogen-doped carbon nanostructure,
wherein the electrochemical catalyst comprises an $M_1$-$N_x$ moiety and an $M_2$-$N_x$ moiety having a structure in which the first transition metal ($M_1$) and the second transition metal ($M_2$) are each bonded to a nitrogen atom of the nitrogen-doped carbon nanostructure (wherein $N_x$ represents a nitrogen atom having coordination ability), and
wherein the first transition metal ($M_1$) and the second transition metal ($M_2$) are indirectly linked to each other.

BRIEF DESCRIPTION OF THE DRAWINGS

The above and other objects, features, and other advantages of the present disclosure will be more clearly understood from the following detailed description taken in conjunction with the accompanying drawings, in which:

FIG. 1 is a schematic diagram illustrating a process for preparing a single atom catalyst according to an embodiment;
FIG. 2 is a schematic diagram illustrating a series of operations for preparing each of bimetallic single-atom (Ni and Mn) catalysts (Indirect-bonding (or, Non-bonding) NiMn/N-doped porous carbon (NPC) and Direct bonding NiMn/NPC) and monometallic single-atom catalysts (Ni/NPC and Mn/NPC) according to Examples and Comparative Examples;
FIGS. 3A to 3E are scanning electron microscope (SEM) images, transmission electron microscopy (TEM) images, high-angle annular dark-field scanning transmission electron microscopy (HAADF-STEM)/elemental mapping images, intensity profiles and corresponding electron energy-loss (EEL) spectroscopy spectra of the NiMn/NPC catalyst;
FIG. 4 shows X-ray diffraction (XRD) patterns of each of the bimetallic single-atom (Ni and Mn) catalysts (Indirect-bonding (Non-bonding) NiMn/NPC and Direct bonding NiMn/NPC) and the monometallic single-atom catalysts (Ni/NPC and Mn/NPC);
FIG. 5 is a graph illustrating the results of Brunauer-Emmett-BET (BET) analysis of each of the bimetallic single-atom (Ni and Mn) catalysts (Indirect-bonding (Non-bonding) NiMn/NPC) and the monometallic single-atom catalysts (Ni/NPC and Mn/NPC);
FIG. 6A is a graph illustrating the results of XANES (synchrotron-based X-ray absorption near-edge structure) analysis for each of Ni phthalocyanine, Ni foil, bimetallic single-atom (Ni and Mn) catalysts (Indirect-bonding (Non-bonding) NiMn/NPC and Direct bonding NiMn/NPC) and the monometallic single-atom catalyst (Ni/NPC);
FIG. 6B is a graph illustrating the results of XANES (synchrotron-based X-ray absorption near-edge structure) analysis for Mn phthalocyanine, Mn foil, the bimetallic single-atom (Ni and Mn) catalysts (Indirect-bonding (Non-bonding) NiMn/NPC and Direct bonding NiMn/NPC) and the monometallic single-atom catalyst (Mn/NPC);
FIG. 7A is a graph illustrating the results of EXAFS (extended X-ray absorption fine structure) analysis of Ni phthalocyanine, Ni foil, the bimetallic single-atom (Ni and Mn) catalysts (Indirect-bonding (Non-bonding) NiMn/NPC and Direct bonding NiMn/NPC) and the monometallic single-atom catalyst (Ni/NPC);
FIG. 7B is a graph illustrating the results of EXAFS (extended X-ray absorption fine structure) analysis of Mn phthalocyanine, Mn foil, the bimetallic single atom (Ni and Mn) catalysts (Indirect-bonding (Non-bonding) NiMn/NPC and Direct bonding NiMn/NPC) and the monometallic single-atom catalyst (Mn/NPC);
FIG. 8A is a graph illustrating the Faraday efficiency for carbon monoxide generation of each of the bimetallic single atom (Ni and Mn) catalysts (Indirect-bonding (Non-bonding) NiMn/NPC and Direct bonding NiMn/NPC), the monometallic single-atom catalysts (Ni/NPC and Mn/NPC) and the commercial Ag/C catalyst;
FIG. 8B is a graph illustrating the current density for carbon monoxide generation of each of the bimetallic single atom (Ni and Mn) catalysts (Indirect-bonding (Non-bonding) NiMn/NPC and Direct bonding NiMn/NPC), the monometallic single-atom catalysts (Ni/NPC and Mn/NPC) and the commercial Ag/C catalyst; and

FIG. 9 is a Tafel plot for carbon monoxide generation of each of the bimetallic single atom (Ni and Mn) catalysts (Indirect-bonding (Non-bonding) NiMn/NPC and Direct bonding NiMn/NPC) and the commercial Ag/C catalyst.

DETAILED DESCRIPTION OF THE INVENTION

The present disclosure will be described with the following description and accompanying drawings. The following description should be understood as describing embodiments of the present disclosure and should not be construed as limiting the scope of the present disclosure. In addition, the accompanying drawings are provided for better understanding of the present disclosure and should not be construed as limiting the scope of the present disclosure. Details of individual configurations may be appropriately understood from the specific intention of the related description given later.

As used herein, the term "catalyst" refers to a component that increases the rate of an electrochemical reaction and participates in the electrochemical reaction while not being consumed by the reaction. In a narrow sense, the catalyst may refer to a component that facilitates a reaction mechanism that provides or accepts electrons in the carbon monoxide evolution reaction and/or oxygen evolution reaction by carbon dioxide reduction reaction.

As used herein, the term "electrochemical carbon dioxide conversion reaction" generally refers to a reaction in which carbon dioxide is reduced to useful compounds based on the potential difference generated between two electrodes (cathode and anode) to induce movement of electrons, more specifically, a reaction in which carbon dioxide is reduced to carbon monoxide.

As used herein, the term "nanostructure" refers to any nanoscale object with a shape such as nanopillar, nanorod, nano-wall, nanowire, nano-web, or the like, having a feature or texture having a nanoscale dimension or size (e.g., about 0.1 to 1,000 nm; in an embodiment, it may be 1 to 100 nm).

As used herein, the term "single atom catalyst" refers to a catalyst in which an active metal attached or fixed to a support is present as an isolated or individual atom.

As used herein, the term "indirect bonding (non-bonding)" refers to a linkage of two atoms or ions via another atom or group rather than direct bonding therebetween. Conversely, "direct bonding" refers to a linkage of two atoms or ions with direct binding to each other (e.g., metal-metal bonding).

As used herein, the term "electrode" refers to a conductive structure that is electrically connected to an external power source in a carbon dioxide reduction reaction ($CO_2RR$) system and is typically physically separated from the external power source. The term "electrode" also includes a cathode at which reduction occurs or an anode at which oxidation occurs, when a voltage is applied from an external power source.

As used herein, the term "catalyst electrode" refers to a current collector on which a catalyst is loaded, whereby catalyst is absorbed thereon or is electrically connected thereto in a discrete or separate manner. In an embodiment, the catalyst electrode may be associated with the current collector through a change in oxidation state and/or dynamic equilibrium with an aqueous medium when the catalyst is exposed to the aqueous medium (e.g., an aqueous electrolyte solution).

As used herein, the term "electrochemical electrode" refers to an electrode structure in which a catalyst component facilitating carbon dioxide reduction reaction is mixed with or attached to a substrate for an electrode (cathode and/or anode).

As used herein, the term "overpotential" refers to a potential in excess of the thermodynamic requirement for reduction or oxidation to obtain the desired catalytic activity. Here, "overpotential" may mean the difference between the voltage to be applied to the electrode in order to induce carbon dioxide reduction reaction and the thermodynamic voltage required for the carbon dioxide reduction reaction.

Throughout the description, the term "left", or "right" is used to refer to the relative positioning between elements or members, and the expressions "disposed at the left..." and "disposed at the right..." are used to refer to the relative positioning between elements (or members) wherein the elements (or members) may contact or not contact one another.

When a numerical range is specified herein with a lower limit and/or an upper limit, it will be understood that any subcombination within the numerical range is also disclosed. For example, the expression "1 to 5" may include 1, 2, 3, 4, and 5, and any sub-combination thereof.

Throughout the description, when any element or member is described as "connected" to another component or member, unless stated otherwise, one element or member may be directly disposed on another element or member, or one element or member may be indirectly disposed on another element or member, with a further element or member interposed therebetween.

In a similar way, when any element or member is described as "contacting" another component or member, unless stated otherwise, one element or member may directly contact another element or member, or one element or member may indirectly contact another element or member, with a further element or member interposed therebetween.

Unless stated otherwise, the term "comprise" will be understood to imply the inclusion of stated elements and/or operations, and not to imply the exclusion of any other elements.

## Single atom catalyst for carbon dioxide conversion

The electrochemical catalyst according to one embodiment of the present disclosure may be used as a catalyst for a cathode in a carbon dioxide reduction system that includes an anode (or oxidation electrode) and a cathode (reduction electrode), both of which are electrically connected to an external power source, and an electrolyte (specifically, an aqueous electrolyte) is filled or loaded between the anode and the cathode. This electrochemical carbon dioxide conversion reaction is a process of electrolyzing carbon dioxide along with an aqueous medium to obtain a desired product, where the reduction of carbon dioxide occurs at the cathode by electrical energy supplied from the external power source as depicted in Reaction Scheme 1 below, while the oxygen evolution reaction occurs at the anode via oxidation as depicted in Reaction Scheme 2 below.

[Reaction Scheme 1] $CO_2 + H_2O + 2e\text{-} \rightarrow CO + 2OH\text{-}$

[Reaction Scheme 2] $2OH^- \rightarrow 1/2O_2 + H_2O + 2e^-$

In particular, the detailed mechanism of the carbon dioxide reduction reaction at the cathode may be depicted in Reaction Scheme 3 below.

[Reaction Scheme 3]

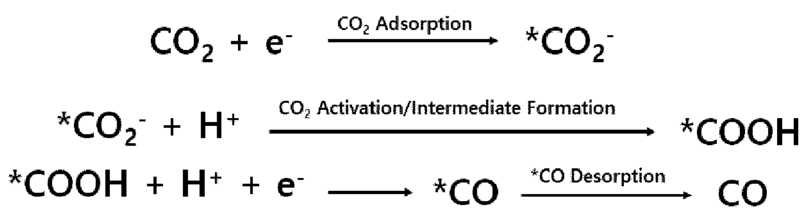


According to the present embodiment, a catalyst in which two types of metals, that is, a first transition metal ($M_1$) and a second transition metal ($M_2$) are each loaded (decorated or supported) in the form of single atoms in a nitrogen-doped carbon nanostructure is provided as an electrochemical catalyst that facilitates the carbon dioxide reduction reaction ($CO_2RR$) occurring at the cathode. In this case, the catalyst may be a hybrid catalyst in which two types of transition metals simultaneously exist as single atoms. In particular, the first transition metal ($M_1$) and the second transition metal ($M_2$) are adjacent to each other on an atomic (single atom) level. As a result, both adsorption and activation of carbon dioxide and efficient desorption of carbon monoxide can be effectively performed in the carbon dioxide conversion mechanism depicted by Reaction Scheme 3.

In addition, two types of metals (first transition metal ($M_1$) and second transition metal ($M_2$)) interact with each other while being indirectly bonded (or linked) rather than directly bonded (or linked) to each other. Notably, the bimetallic single-atom catalyst can realize high carbon dioxide conversion and carbon monoxide selectivity even at low overpotential, compared to a monometallic single-atom catalyst as well as a single-atom catalyst in which two types of transition metals are directly bonded to each other.

According to one embodiment, the single atom catalyst has a structure (or configuration) in which two transition metals, specifically, a first transition metal ($M_1$) and a second transition metal ($M_2$) are each dispersed or loaded in the form of single atoms in a nitrogen-doped carbon nanostructure as a matrix.

Meanwhile, the nitrogen-doped carbon nanostructure may have porosity. In this case, the nanostructure may have an average pore size (diameter), for example, of about 50 nm to about 1 um, about 100 to about 700 nm, and about 200 to about 500 nm. When the pore size is too small, the active sites may not be uniformly distributed and the transfer of reactants/products may be restricted. On the other hand, when the pore size is too large, the electrode resistance may increase. Therefore, the pore size may be controlled within the ranges described above, which are provided for an illustrative purpose. In addition, pores in the porous nitrogen-doped carbon nanostructure may have a hierarchical structure.

According to an embodiment, the content of nitrogen in the nitrogen-doped carbon nanostructure may range, for example, from about 1 to about 12 at%, from about 2 to 10 at%, and from about 4 to 8 at%. In this regard, the doping amount of nitrogen may affect the degree of bonding with metal atoms, and may be controlled within the aforementioned ranges, but the present disclosure is not limited thereto.

According to the present embodiment, each of the two types of transition metals ($M_1$ and $M_2$) may be selected from types capable of acting as an active site during the carbon dioxide conversion reaction, and/or controlling the

electronic structure of the active site. In addition, any combination or pair of the two types of transition metals may be selected so that charge transfer occurs efficiently through the difference in electronegativity therebetween. For example, the difference in electronegativity between the two types of transition metals may be set within the range of about 0.1 to about 0.5. In an embodiment, the difference in electronegativity may be set within the range of about 0.2 to about 0.4.

According to an embodiment, the first transition metal ($M_1$) may, for example, include at least one selected among nickel (Ni), iron (Fe), silver (Ag), copper (Cu), cobalt (Co), zinc (Zn) and the like. In addition, the second transition metal ($M_2$) may, for example, include at least one selected among manganese (Mn), molybdenum (Mo), titanium (Ti), vanadium (V), chromium (Cr), niobium (Nb), zirconium (Zr), cadmium (Cd) and the like.

In an embodiment, the first transition metal ($M_1$) may be nickel (Ni) and the second transition metal ($M_2$) may be manganese (Mn). The manganese of this binary combination of nickel (Ni) and manganese (Mn) may effectively control nickel and the electronic structure of nickel, which act as an active site for carbon dioxide conversion, thereby improving catalytic performance.

In addition, according to an embodiment, the single atom catalyst may contain additional metal or transition metal in addition to the combination of two types of transition metals for further modification. In this case, the additional metal may also be introduced in the form of a single atom.

According to the present embodiment, the first transition metal ($M_1$) and the second transition metal ($M_2$) are each incorporated in the catalyst while they are bonded to (specifically, coordinated with) the nitrogen atom of the nitrogen-doped carbon nanostructure, specifically as $M_1$-$N_x$ moiety and $M_2$-$N_x$ moiety, which can function as active sites for the carbon dioxide reduction. In this case, $N_x$ may mean a nitrogen atom having coordination ability. In an embodiment, x may be, for example, about 0.5 to about 2.5 (in an embodiment, about 0.8 to about 2.3; in an embodiment about 1 to about 2). However, the present disclosure is not limited thereto.

According to an embodiment, the first transition metal ($M_1$) and the second transition metal ($M_2$) may be indirectly bonded (or linked) to each other, and for example, they may be linked to each other via nitrogen (N). In certain embodiments, the $M_1$-$N_x$ moiety and the $M_2$-$N_x$ moiety in the catalyst may be linked in the form of $M_1$-$N_x$-$N_x$-$M_2$.

According to an embodiment, the content of each of the first transition metal ($M_1$) and the second transition metal ($M_2$) in the catalyst may be, for example, about 0.1 to about 1% by weight (in an embodiment about 0.2 to about 0.8% by weight; and in an embodiment about 0.3 to about 0.6% by weight), and about 0.05 to 0.8% by weight (in an embodiment about 0.1 to about 0.7% by weight; and in an embodiment about 0.2 to about 0.5% by weight).

In addition, according to an embodiment, the atomic ratio of the first transition metal ($M_1$) to the second transition metal ($M_2$) may be, for example, controlled in a range of about 1:0.2 to about 1:1, about 1:0.4 to about 1:0.8, and about 1:0.5 to about 1:0.7.

According to an embodiment, as described above, since the two types of transition metals are loaded or decorated in the form of single atoms in the porous nitrogen-doped carbon nanostructure matrix, the catalyst may also have porosity. In this regard, the specific surface area (BET) of the single atom catalyst may be, for example, of at least about 400 $m^2/g$, about 500 to about 1,000 $m^2/g$, and about 600 to about 800 $m^2/g$. Further, the pore volume of the catalyst may range, for example, from about 0.1 to 1.2 $cm^3/g$, from about 0.3 to 1.0 $cm^3/g$, and from about 0.5 to 0.8 $cm^3/g$. Due to the increased porosity (or high specific surface area), active sites in the catalyst can be effectively exposed to carbon dioxide as a reactant.

According to an embodiment, the specific metal surface area of the single atom catalyst measured by $N_2$ sorption is, for example, at least about 400 $m^2/g$, about 500 to about 1,000 $m^2/g$, and about 600 to about 800 $m^2/g$.

## Method of preparing single atom catalyst for carbon dioxide conversion

According to another embodiment of the present disclosure, a method for preparing the single atom catalyst for the carbon dioxide conversion is provided. FIG. 1 is a schematic diagram illustrating a process of preparing a single atom catalyst according to an embodiment. The process of preparing an single atom catalyst may include, for example, ion adsorption.

Referring to FIG. 1, first, porous carbon (or a carbon nanostructure) is formed, for example, a carbon precursor is thermally decomposed or pyrolyzed (the first thermal decomposition). In this case, one-step thermal decomposition may be performed without using a template to prepare a carbon nanostructure. The carbon precursor may, for example, have an organic framework structure. According to an embodiment, the carbon precursor may include at least one selected from organic salts, polymer composites, biomass, metal organic frameworks (MOFs), carbohydrates, and the like, and hydrates thereof. In an embodiment, for example, the carbon precursor may be an organic salt. The organic salt can be easily converted into a carbon skeleton through heat treatment in an inert atmosphere since it has a carbon-carbon bonding or ring. At this time, the cation in the organic salt may be, for example, a metal cation such as zinc, an alkali metal and an alkaline earth metal, an ammonium ion, or the like. According to other embodiments, the carbon precursor may, for example, include at least one selected from sodium citrate, potassium citrate, glucose carbonate, ammonium citrate, calcium citrate, sodium gluconate, potassium gluconate, sodium alginate, potassium alginate and

hydrates thereof. According to an embodiment, for example, the carbon precursor may be sodium citrate dihydrate.

According to an embodiment, the carbon precursor may be converted into porous carbon by thermal decomposition under an inert atmosphere at a first heat treatment temperature. At this time, the inert atmosphere may be formed by, for example, at least one gas selected from argon, nitrogen, helium, and the like. In an embodiment, the inert atmosphere may be a nitrogen atmosphere. In addition, the first heat treatment temperature may be, for example, controlled within the range of about 400 to about 1,000°C, about 500 to about 900°C, and about 600 to about 850°C. According to an embodiment, the temperature increase rate in the first thermal decomposition may be adjusted depending upon the degree of formation of the morphological properties of the carbon skeleton, for example, about 1 to about 10 °C/min, about 2 to about 8 °C/min, and about 4 to about 6 °C/min. Meanwhile, the heat treatment time is not particularly limited and may be, for example, controlled in a range of at least about 0.1 hour, the range of about 0.2 to about 5 hours, and the range of about 0.5 to about 2 hours. The heat treatment under such an inert atmosphere converts carbon precursors into carbon. For example, organic salts may convert into porous carbon.

According to an embodiment, the carbon produced by thermal decomposition (or pyrolysis) may contain residual impurities (for example, inorganic impurities), metals (e.g., alkali metals, alkali metal oxides, alkaline earth metals and/or alkaline earth metal oxides), and the like. As such, these residual impurities may block or occlude the pore structure of the carbon framework, thereby limiting a porosity increasing effect. In order to solve or alleviate this phenomenon, acid washing or acid leaching (a first acid washing operation or a primary acid washing operation) may be optionally performed. In this case, the acid may, for example, include at least one selected from sulfuric acid, nitric acid, phosphoric acid, hydrochloric acid, formic acid, and the like. For example, the acid may be sulfuric acid and/or hydrochloric acid. In addition, the acid may be used in the form of an acidic aqueous solution during the acid washing operation, and the concentration thereof may be adjusted within the range of, for example, about 0.1 to about 2 M, specifically about 0.5 to about 1.5 M, but this is provided as an example.

Meanwhile, referring again to FIG. 1, after the formation of the porous carbon, nitrogen dopants may be incorporated into the porous carbon to prepare a nitrogen (N)-doped porous carbon nanostructure. As described above, nitrogen doping may provide nitrogen atoms capable of being coordinated or chelated with a transition metal (for example, a transition metal ion) to form an $M\text{-}N_x$ active site.

In an embodiment, nitrogen doping may be performed using a compound containing both nitrogen and carbon or a nitrogen source containing a nitrogen atom in the molecule, such as a nitrogen-containing organic compound. To this end, first, the porous carbon may be brought into contact with a nitrogen source to form a nitrogen source-porous carbon composite. At least one precursor may be used as such a nitrogen source without limitation to a particular compound, as long as it can be carbonized by heat treatment such as thermal decomposition. Examples of the nitrogen source include urea, melamine, ammonia, polyamide imide resins, adenine, pyrrole, polypyrrole, polyvinylpyrrole, 3-methylpolypyrrole, acrylonitrile, polyacrylonitrile, phenanthroline, polyacrylonitrile-polymethacrylic acid copolymers, pyrazole, vinylpyridine, polyvinylpyridine, pyrimidine, piperazine, pyran, carbamide, morpholine, imidazole, 1-methylimidazole, 2-methylimidazole, quinoxaline, aniline, polyaniline, polyimide, benzoimidazole, polybenzoimidazole, polyamide, ethylenediamine, cyanamide and the like. In an embodiment, for example, the nitrogen source may be polypyrrole. Since polypyrrole contains one nitrogen per pyrrole monomer molecule, it enables not only effective doping of nitrogen, but also uniform doping on the surface of porous carbon upon coating.

According to an embodiment, the previously prepared porous carbon is dispersed in a liquid medium (dispersion medium), and then a nitrogen source may be added thereto, thus being brought contact with the porous carbon. In this case, the liquid medium may contain at least one selected from water and C1-C4 aliphatic alcohol (e.g., methanol, ethanol, n-propanol, isopropanol, and/or n-butanol). In an embodiment, for example, the liquid medium may be a mixed solvent of ethanol and water. At this time, a volume ratio of ethanol to water may be adjusted within the range of, for example, about 1:0.1 to 1:2, about 1:0.4 to about 1:1.6, and about 1:0.8 to 1:1.2. However, the above ranges are mere examples, and the disclosure is not limited thereto.

According to an embodiment, first, the nitrogen source may be coated or attached to the porous carbon in the carbon dispersion for nitrogen doping. In this regard, the amount of the nitrogen source to be added to the carbon dispersion may be determined depending on the amount of nitrogen incorporated (doped) into the porous carbon. Since the total amount of the added nitrogen source is not doped, the amount to be added may be greater than the amount actually incorporated. By way of example, the amount of the nitrogen source to be added relative to the porous carbon may be controlled to be within the range of about 0.1 to about 0.6, about 0.12 to about 0.4, and about 0.15 to about 0.25, based on the weight of the porous carbon.

Meanwhile, according to an embodiment, a monomer-type nitrogen source may be added to a porous carbon dispersion and then the nitrogen source may be coated with or attached to the porous carbon by in-situ polymerization (formation of nitrogen source-porous carbon composite). For example, monomers such as pyrrole, phenanthroline, aniline, and melamine are added and then polymerized via a chemical oxidation route using an oxidant. At this time, the oxidant may be used in the form of a solution for effective polymerization. According to an embodiment, the oxidant may, for example, be ammonium persulfate, ammonium peroxydisulfate, sodium persulfate, potassium persulfate, iron (III)

chloride, iron (II) chloride, hydrogen peroxide, iron (III)-alkyl benzenesulfonate or the like may be used alone or in combination of two or more thereof. The amount of the oxidant may be within the range of, for example, about 5 to about 30 times, about 8 to about 20 times, and about 10 to about 15 times, based on the numbers of moles of the monomer. In addition, the polymerization time may be controlled in a range of, for example, about 0.1 to about 30 hours, about 1 to about 20 hours, and about 1.5 to about 10 hours.

Referring again to FIG. 1, the two types of transition metal precursors may be introduced into the nitrogen source-porous carbon composite by ion adsorption. In this case, the transition metal precursors may typically be used in the form of a water-soluble compound, for example, halide, organic acid salt, inorganic acid salt, hydroxide, complex, or a combination thereof, a hydrate thereof or the like. In an embodiment, the inorganic acid salt may include at least one selected from nitrate, sulfate, carbonate, halide, or the like. Also, the organic acid salt may include at least one selected from acetates, alkoxides, and glutarates. In addition, the halide may include at least one selected from fluoride, chloride, bromide, iodide, and the like.

Meanwhile, when nickel is used as the first transition metal ($M_1$), for example, a nickel compound (specifically, a salt or complex) having an oxidation value of $2^+$ may be used. For example, the nickel compound may include at least one selected from nickel nitrate, nickel sulfate, nickel chloride, nickel carbonate, acetylacetonate nickel complexes, nickel acetate, and the like, or a hydrate thereof. In an embodiment, for example, the nickel compound may be nickel nitrate and/or a hydrate thereof (e.g., $Ni(NO_3)_2 \cdot 6H_2O$).

In addition, when manganese is used as the second transition metal ($M_2$), a manganese compound having an oxidation value of $2^+$ may be used. In an embodiment, for example, the manganese compound may include a salt or complex. For example, the manganese compound may include at least one selected from manganese nitrate, manganese sulfate, manganese acetate, manganese chloride, manganese carbonate, a manganese acetylacetonate complex, and the like, or a hydrate thereof. In an embodiment, the manganese compound may be manganese nitrate and/or a hydrate thereof (e.g., $Mn(NO_3)_2 \cdot 6H_2O$).

According to an embodiment, the two types of transition metal precursors may be provided in the form of a solution (e.g., aqueous solution). The two types of precursors may be added to a single solution, or respective single transition metal precursor solutions may be prepared and then be combined with each other. The concentration of each of the first transition metal precursor and the second transition metal precursor in the precursor solution is not particularly limited. In consideration of the degree of ion adsorption, the concentration may be, for example, about 0.2 to 0.8 mg/mL (in an embodiment, about 0.4 to about 0.6 mg/mL) and about 0.1 to 0.7 mg/mL (in an embodiment, about 0.3 to about 0.5 mg/mL). The previously prepared nitrogen source-porous carbon composite may be added to the two types of transition metal precursor solutions thus prepared. Alternatively, a dispersion (e.g., aqueous dispersion) of the nitrogen source-porous carbon composite may be prepared and then two types of transition metal precursors or a solution thereof may be added thereto. According to an embodiment, the weight ratio of the nitrogen source-porous carbon composite to the total transition metal may depend on the amount of the transition metal loaded or decorated in the final catalyst. In consideration of the transition metal that is not actually loaded, the weight ratio may be, for example, within the range of about 1:0.04 to about 1:0.16, about 1:0.06 to about 1:0.14, and about 1:0.08 to about 1:0.12. However, the above ranges are mere examples, and the disclosure is not limited thereto.

Through the process, a nitrogen source-porous carbon composite in which two types of transition metal precursors (ions) are adsorbed may be formed. Subsequently, thermal decomposition to form a single atom catalyst may be performed. At this time, thermal decomposition (the second thermal decomposition) may be performed under an inert atmosphere at a second heat treatment temperature. As described above, the inert atmosphere may be formed by, for example, at least one gas selected from argon, nitrogen, helium, and the like. In an embodiment, for example, the inert atmosphere may be a nitrogen atmosphere. In addition, the second heat treatment temperature may be controlled within the range of, for example, about 700 to about 1,000 °C, about 750 to 900 °C, and about 780 to 850 °C. At this time, the temperature increase rate in the second thermal decomposition may be controlled depending upon the degree of aggregation of metal ions, for example, about 0.5 to about 8 °C/min, about 1 to about 6 °C/min, and about 2 to about 4 °C/min.

The second thermal decomposition enables formation of a product in which two types of transition metals ($M_1$ and $M_2$) are loaded or supported in the nitrogen-doped carbon nanostructure. At this time, the single atom of each of the two transition metals, which bonds to or coordinates with nitrogen (i.e., as a $M_1$-$N_x$ moiety and a $M_2$-$N_x$ moiety), is incorporated into or doped into the carbon nanostructure.

It should be noted in the second thermal decomposition that the bonding (or linking) form between the two types of transition metal atoms can be controlled using the heat treatment condition, particularly the heat treatment time. Specifically, in the initial stage of thermal decomposition, the adsorbed first transition metal and second transition metal form a $M_1$-$N_x$ moiety and a $M_2$-$N_x$ moiety, respectively, which are linked adjacent to each other in the form of $M_1$-$N_x$-$N_x$-$M_2$. Then, as the heat treatment time increases, the linkage of $M_1$-$N_x$-$N_x$-$M_2$ is converted to $N_x$-$M_1$-$M_2$-$N_x$, in which $M_1$ directly bonds to $M_2$. Therefore, in this embodiment, for indirect bonding between the two transition metals, the second thermal decomposition reaction time may be, for example, about 8 hours or less, about 6 hours or less, about 0.5 to about 4 hours, and about 0.8 to about 3 hours. According to an embodiment, the second thermal decomposition time may be

controlled within about 2 hours, and within about 1.5 hour. As the thermal decomposition temperature increases, the movement between metal ions ($M_1$ and $M_2$) is promoted to induce Nx-M1-M2-Nx bonds.

According to an embodiment, after the second heat treatment, the transition metals not bonded to nitrogen atoms, particles of transition metals aggregated at high temperatures, and the like are removed, while acid washing or acid leaching may be optionally performed to desirably disperse single atoms in nitrogen-doped carbon nanostructures (a second acid washing operation or a secondary acid washing operation). In this case, the type and/or concentration of the acid used in the second acid washing may be the same as or different from in the first acid washing, however controlled within the range described in connection with the first acid washing. As such, thermal decomposition, or thermal decomposition and acid washing are performed, and then at least one of conventional post-treatments, for example, at least water washing, drying and the like, may be performed to obtain a single atom catalyst. Since these post-treatments are widely known in the art, detailed descriptions thereof will be omitted.

Meanwhile, in the single atom catalyst according to the present embodiment, the bonds of two types of transition metals with nitrogen are linked adjacent to each other in a nitrogen-doped carbon nanostructure through indirect bonding (or linkage), which has a significant effect on the electronic structure or configuration, thus controlling the adsorption strength with the intermediate generated during the carbon dioxide conversion. As a result, low overpotential, high current density and high selectivity for carbon monoxide can be achieved.

In this regard, the carbon dioxide uptake capacity (25 °C) of the single atom catalyst may be, for example, in a range of at least about 1 mmol/g, about 1.5 to 3 mmol/g, and about 2 to 2.5 mmol/g.

## Electrode (catalyst electrode) and system for carbon dioxide reduction

According to another embodiment of the present disclosure, two types of transition metal single atom catalysts may be introduced or loaded into an electrochemical electrode to realize a system for converting carbon dioxide (specifically, selectively reducing carbon dioxide to carbon monoxide). In particular, the electrode on which the catalyst is loaded may be applied as a cathode at which carbon monoxide is generated in the carbon dioxide conversion system.

According to an embodiment, the catalyst may be loaded on a conductive substrate to fabricate the electrode. As such, the loading is not limited to a particular method, and may be selected from methods known in the art, for example, slurry loading, deposition, spray coating, or the like.

In case of the slurry loading method, first, a slurry of the previously prepared catalyst (as a dispersion medium, for example, at least one selected from the group consisting of alcohol having 1 to 4 carbon atoms (e.g., methanol, ethanol, or propanol) and water (e.g., distilled water)) may be prepared. At this time, the concentration of the catalyst in the slurry may be adjusted within the range of, for example, about 5 to 30% by weight, and about 10 to 20% by weight. Subsequently, a catalyst electrode may be prepared by applying the slurry to an electrode substrate (e.g., a conductive substrate) and then drying the slurry.

Alternatively, a deposition method may be used. In this case, the catalyst layer to be loaded may be controlled by adjusting the deposition rate, drying temperature, or the like and washing may be performed after deposition.

According to embodiments, the substrate on which the catalyst is loaded may have any of various shapes such as a plate, a rod, a mesh, a disk, a wire or paper. In addition, the conductive substrate may be made of a material capable of maintaining conductivity even when exposed to an oxidization atmosphere, for example, at least one selected from a valve metal, and stainless steel, and carbon, and the like. The valve metal may include, for example, titanium, aluminum, chromium, and the like.

In an embodiment, the amount of catalyst that is loaded is, for example, within the range of about 0.2 to 5 $mg/cm^2$, about 0.5 to 3 $mg/cm^2$, and about 0.8 to 2 $mg/cm^2$, based on the electrode. However, the above ranges are mere examples, and the disclosure is not limited thereto.

According to an embodiment of the present disclosure, a carbon dioxide conversion system in which carbon dioxide is reduced using the electrochemical electrode as described above as a cathode to generate carbon monoxide at the cathode and oxygen at the anode may be implemented. Specifically, when voltage is applied from an external power source, electrons are supplied to the cathode and react with carbon dioxide at the cathode to generate carbon monoxide gas and hydroxide ions ($OH^-$). At this time, the generated carbon monoxide gas is discharged to the outside and hydroxide ions move to the anode. The hydroxide ions moved to the anode lose electrons (i.e., oxidation) and are converted into oxygen gas, which are then discharged.

In this regard, the carbon dioxide conversion system basically includes a pair of opposite electrodes (i.e., an anode and a cathode), and each of the pair of electrodes is electrically connected to an external power source (e.g., a potentiostat, a battery, or the like). In case of a threeelectrode system, it may further include a reference electrode. The reference electrode may be selected from the group consisting of Ag/AgCl, SCE (saturated calomel electrode), Hg/HgO, and $Hg/Hg_2SO_4$. In an embodiment, for example, the reference electrode may be Ag/AgCl (3M NaCl).

According to an embodiment, in the carbon dioxide conversion system, among a pair of electrodes, an electrochemical electrode containing the aforementioned catalyst or being attached thereto is used as a cathode and the

other electrode, the anode may be made of any type of material known in the art. In this regard, the anode may also be made of a conductive material. For example, the conductive material applicable to the cathode may be selected from materials capable of exhibiting particularly low overpotential while easily generating carbon monoxide and not being decomposed even when contacting an aqueous electrolyte solution. For example, this material may include at least one selected from nickel, carbon, titanium, stainless steel, and the like, or an alloy thereof. In the carbon dioxide conversion system according to a certain embodiment, each of the cathode and the anode may be operated in such a manner that the entire surface of thereof is in contact with or immersed in an electrolyte-containing aqueous solution.

Meanwhile, according to an embodiment, an aqueous electrolyte solution (which may be alkaline) in which the electrolyte is dissolved in the aqueous medium may be supplied to the carbon dioxide conversion system. In this case, the alkaline medium (or electrolyte) may contain at least one selected from potassium hydroxide, potassium hydrogen carbonate, potassium bicarbonate, sodium hydrogen carbonate, sodium hydroxide, lithium hydroxide, and the like. In an embodiment, the concentration of the alkaline medium may be, for example, within the range from about 0.05 to about 3 M, from about 0.1 to about 2 M, and from about 0.5 to about 1.5 M. In addition, the pH of the alkaline medium (i.e., the electrolyte-containing aqueous solution) may be adjusted within the basic range, for example, within the range of about 9 to about 14, about 11 to about 14, and about 12 to about 14.

Alternatively, a carbon dioxide conversion system may be configured using a polymer electrolyte membrane or the like as a separator. This separator is typically an ion exchange membrane, for example, such as an anion exchange membrane, that is disposed between the cathode and the anode, and functions to isolate an anode compartment from a cathode compartment. In this regard, examples of separator materials include porous ceramic membranes, for example, such as zirconia-based membranes, porous polymeric membranes, for example, such as polyolefin-based or polypropylene-based membranes, solid polymer electrolyte membranes, for example, such as an ion exchange membrane made of a fluorosulfonic acid polymer under the trade name Nafion, and the like.

In general, the reduction reaction of carbon dioxide in the thermodynamic standard state occurs around 0 V (vs. RHE), but occurs at a negative potential taking into consideration the concentration region of hydrogen ions which actually participate in the reaction. Moreover, a higher overpotential is required to electrochemically reduce carbon dioxide, considering the reaction rate. In addition, in the carbon dioxide reduction, it is preferable to suppress the hydrogen generation reaction (HER) occurring at a similar reduction potential. The potential allowing current of the identical intensity to flow through the pair of opposite electrodes differs at each electrode and the voltage at this time corresponds to the overpotential at each electrode.

In the carbon dioxide conversion system including the electrochemical electrode using the composite catalyst according to the present embodiment, the reduction can be performed at a low overpotential. For example, when carbon monoxide is generated at the cathode, operation is possible at a low overpotential. In addition, the carbon dioxide reduction may be performed at, for example, about 15 to about 40 °C, about 20 to about 30 °C, and at room temperature.

When the electrochemical electrode loaded with the single atom catalyst according to the present embodiment is used as a cathode, in the carbon dioxide reduction (carbon monoxide production) under a condition of overpotential of 0.297 V (vs. RHE) in the presence of 1 M KOH (pH 14), it may exhibit a current density of at least about 200 mA/cm$^2$, about 220 to about 400 mA/cm$^2$, about 250 to about 350 mA/cm$^2$, and about 280 to about 320 mA/cm$^2$. In addition, the Tafel slope may be, for example, about 200 mV/dec or less, about 180 mV/dec or less, and about 160 mV/dec or less.

Meanwhile, Faraday efficiency is an index for evaluating the efficiency and selectivity of an electrochemical reaction and may be represented by Equation 1 below.

Equation 1

$$\mathrm{FE} = \frac{z \times n \times F}{I \times t} \times 100$$

wherein z is the number of electrons, n is the molar ratio of the product, I is the applied current, t is the reaction duration, and F is the Faraday constant.

According to the present embodiment, in the electrochemical reaction of converting carbon dioxide into carbon monoxide, the Faraday efficiency may be at least about 90%. In an embodiment, the Faraday efficiency may be at least about 93%. In an embodiment, the Faraday efficiency may be at least about 95%.

Hereinafter, embodiments will be provided for better understanding of the present disclosure. However, the following examples are provided only for illustration of the present disclosure and thus should not be construed as limiting the scope of the present disclosure.

## Example

The details of the materials used in this Example, catalyst analysis and electrochemical performance test are as follows.

### A. Materials

- Pyrrole ($C_4H_5N$), ammonium persulfate ($(NH_4)_2S_2O_8$), sodium citrate dihydrate ($C_6H_5Na_3O_7 \cdot 2H_2O$), sulfuric acid, hydrochloric acid, potassium hydroxide, ethanol, nickel nitrate hexahydrate, and nickel phthalocyanine ($C_{32}H_{16}N_8Ni$) were each purchased from Sigma-Aldrich.
- Manganese nitrate hexahydrate ($Mn(NO_3)_2 \cdot 6H_2O$) was purchased from Alfa Aesar.
- Sigracet 39BB carbon paper and commercial Ag/C electrodes were purchased from Dioxide Materials.
- Deionized water (DI, 18 MΩ cm) was purchased from Millipore and used throughout the entire experiment.

### B. Physical chemical catalyst analysis

- Scanning electron microscopy (SEM) analysis was performed using JSM-7401 F.
- High-resolution transmittance electron microscope (HR-TEM) and element mapping analysis were performed using JEM-2100 F provided with Haadf-STEM detectors.

The metal crystal surface was observed using X-ray diffraction (XRD; PANalytical). At this time, measurement was performed at 40 kV and 100 mA using a Cu Kα line in the range of 10 to 80° at a scan rate of 6°/min at an interval of 0.01°.

- Ni K-edge XAFS spectrum in the range of 8132-9078 eV photon energy and Mn K-edge XAFS spectrum in the range of 6339-7284 eV photon energy were obtained using X-ray absorption fine structure (XAFS; PLS-II).
- The content of the metal (wt%) in the prepared catalyst was obtained using inductively coupled plasma atomic emission spectroscopy (ICP-AES, NexION 300X).
- The XPS spectrum of surface element was obtained using a high-performance X-ray photoelectron spectrometer (XPS; VG multilab 2000).
- Ni K-edge and Fe K-edge XANES (X-ray absorption near edge structure) spectra were obtained from the Pohang Accelerator Laboratory (PLS-II, 7D beamline) and a part of the Demeter program was used for XAS data analysis.
- The specific surface area ($m^2/g$) of the prepared catalyst was obtained by measuring the $N_2$ sorption isotherm at -196 °C through BET analysis (Brunauer-Emmett-Teller analysis; Quadrasorb SI).

### C. Electrochemical test

Carbon paper (Sigracet 39BB, Dioxide Materials) was coated with each catalyst in a loading amount of 1 mg/cm$^2$ using a spray gun to set a working electrode. Hg/HgO (sat. 1M NaOH), CoFeMnOx foil, and Sustainion anion exchange membrane (Dioxide Materials) were used as the reference electrode, counter electrode, and ion exchange membrane, respectively, and all measured values were expressed as RHE (reversible hydrogen electrode).

A 1 M KOH solution having pH 14 was used as the electrolyte, which was circulated to the working electrode at a rate of 1.5 mL/min, and the same electrolyte was also used for the counter electrode. Carbon dioxide gas was continuously supplied at a flow rate of 20 mL/min to the gas diffusion layer of carbon paper in the cathode.

The electrochemical carbon dioxide conversion performance was measured at -40 mA/cm$^2$, -70 mA/cm$^2$, -120 mA/cm$^2$, -200 mA/cm$^2$, -300 mA/cm$^2$, -350 mA/cm$^2$, and -370 mA/cm$^2$ for 1 hour using chronopotentiometry and the generated gas was analyzed by gas chromatography (Agilent 7890).

## Catalyst synthesis

In Examples and Comparative Examples, bimetallic (Ni and Mn) single-atom catalysts (indirect bonding (Non-bonding) NiMn/NPC and direct bonding NiMn/NPC) and monometallic single-atom catalysts (Ni/NPC and Mn/NPC) were prepared as catalysts in accordance with the procedure shown in FIG. 1 respectively.

**Example 1**

Preparation of indirect bonding (Non-bonding) NiMn/NPC catalyst

Sodium citrate dihydrate was thermally decomposed (pyrolyzed) under a $N_2$ atmosphere at 800 °C (a first (primary) thermal decomposition (pyrolysis)) for 1 hour and washed with a 1M $H_2SO_4$ solution (Sigma) to remove residual inorganic impurities in the powder obtained thereby to obtain porous carbon. The thus-prepared porous carbon was dispersed in a mixed solution containing 40 mL of ethanol and 40 mL of distilled water under ultrasonication and subsequently 2.2 mmol of a pyrrole monomer was added thereto, followed by stirring for 30 minutes. Then, a solution of 26 mmol of ammonium persulfate as an oxidant in 10 mL of distilled water was added dropwise to the dispersion while stirring for 2 hours to synthesize a polypyrrole-porous carbon composite (PPyPC) in which porous carbon is coated with polypyrrole.

Ion adsorption was used to prepare the Ni-Mn bimetallic single atom catalyst. First, the polypyrrole-porous carbon composite was added to 40 mL of a metal nitrate precursor (0.5 mg/mL of nickel nitrate and 0.4 mg/mL of manganese nitrate) solution, followed by stirring for one day to adsorb metal ions onto the polypyrrole-porous carbon composite ($Ni^{2+}$-$Mn^{2+}$-PPyPC) . The resulting material was centrifuged, collected, dried, thermally decomposed (pyrolyzed) under an $N_2$ atmosphere at 800 °C for 1 hour (a second (secondary) thermal decomposition (pyrolysis)), and finally washed with 1M HCl solution to remove metal nanoparticles generated by aggregation at a high temperature to thereby prepare a NiMn/NPC catalyst.

**Comparative Example 1**

Preparation of direct bonding NiMn/NPC catalyst

A NiMn/NPC catalyst was prepared in the same manner as in Example 1, except that the secondary thermal decomposition time was adjusted to 4 hours.

**Comparative Example 2**

Preparation of Ni/NPC catalysts

A Ni/NPC catalyst was prepared in the same manner as in Example 1, except that only nickel nitrate was used as the metal precursor.

**Comparative Example 3**

Preparation of Mn/NPC catalyst

A Mn/NPC catalyst was prepared in the same manner as in Example 1, except that only manganese nitrate was used as the metal precursor.

**Comparative Example 4**

A commercial Ag/C catalyst was prepared.

**Catalyst characterization**

- SEM images, transmission electron microscopy (TEM) images, high-angle annular dark-field scanning transmission electron microscopy (HAADF-STEM)/elemental mapping images, intensity profiles and corresponding electron energy-loss (EEL) spectra of the NiMn/NPC catalyst are shown in FIGS. 3A to 3E. As can be seen from FIGS. 3A and 3B, the NiMn/NPC catalyst has a developed hierarchical framework structure with open pores in multidirectional channels. The results of HAADF-STEM analysis shown in FIG. 3C demonstrates that Ni and Mn atoms are uniformly distributed on the porous carbon, and the results of elemental mapping analysis show that Ni and Mn atoms are uniformly distributed throughout the carbon structure. As can be seen from FIG. 3D, many metal pairs are adjacent to one another with an average distance of about 4.0 Å, which suggests that single atom pairs are formed in the NiMn/NPC catalyst. In addition, as can be seen from the result of EEL spectrum analysis in FIG. 3E, the single atom pair contains one Ni atom and one Mn atom, which indicates that the Ni-Mn single atom active sites are formed to

be adjacent to each other in the NiMn/NPC catalyst.

- XRD patterns of each of the bimetallic single atom (Ni and Mn) catalysts (Indirect bonding (Non-bonding) NiMn/NPC and Direct bonding NiMn/NPC) and single metal single atomic metal catalysts (Ni/NPC and Mn/NPC) are shown in FIG. 4.

Referring to FIG. 4, in all the catalysts prepared according to Example 1 and Comparative Examples 1 to 3, peaks related to metals other than the carbon peak (002 plane) at about 22° were not observed. These results indicate that the metals are uniformly distributed in the carbon support as a single atom without formation of metal crystal particles.

- Inductively coupled plasma (ICP) analysis was performed on metals (Ni and/or Mn) in the catalysts prepared according to Example 1 and Comparative Examples 1 to 3 and the results are shown in Table 1 below.

[Table 1]

| Item | Ni (wt%) | Mn (wt %) |
|---|---|---|
| Indirect bonding (Non-bonding) NiMn/NPC | 0.40 | 0.24 |
| Direct bonding NiMn/NPC | 0.42 | 0.27 |
| Ni/NPC | 0.59 | - |
| Mn/NPC | - | 0.43 |

- BET analysis results for each of the bimetallic single atom (Ni and Mn) catalysts (Indirect bonding (Non-bonding) NiMn/NPC) and single-metal single atomic metal catalysts (Ni/NPC and Mn/NPC) are shown in FIG. 5.

As can be seen from FIG. 5, the catalysts prepared according to Example 1 and Comparative Examples 2 and 3 exhibited similar pore structures, specific surface areas (651 to 662 $m^2/g$), and pore volumes (total pore volume). It is supposed that they have similar pore structures because heat treatment (the second thermal decomposition (pyrolysis)) was performed at the same temperature, and reactants can access more active sites due to the increased porosity (high specific surface area and pore volume) and can provide efficient transport channels for electron and carbon dioxide reduction reaction ($CO_2RR$) species.

- The results of X-ray absorption near edge structure (XANES) analysis of Ni phthalocyanine, Ni foil, bimetallic single atom (Ni and Mn) catalysts (Indirect-bonding (Non-bonding) NiMn/NPC and Direct bonding NiMn/NPC) and monometallic single-atom catalysts (Ni/NPC), and the results of XANES analysis of Mn phthalocyanine, Mn foil, bimetallic single atom (Ni and Mn) catalysts (Indirect-bonding (Non-bonding) NiMn/NPC and Direct bonding NiMn/NPC), and single-metal metal atom catalysts (Mn/NPC) are shown in FIGS. 6A and 6B, respectively.

As can be seen from FIGS. 6A and 6B, each of the indirect-bonding (non-bonding) NiMn/NPC catalyst and the direct bonding NiMn/NPC catalyst negatively shifted from the Ni/NPC catalyst at the pre-edge position of the Ni K-edge spectrum, whereas it positively shifted from the Mn/NPC catalyst at the pre-edge position of the Mn K-edge spectrum.

Based on the above results, it can be concluded that, in the two types of NiMn/NPC catalysts, the Ni atoms and the Mn atoms electrically interact with each other through indirect bonding or direct bonding. Furthermore, comparing the degree of shift in the electronic structure of Ni, which acts as a major site for CO active sites, the indirect-bonding (non-bonding) NiMn/NPC catalyst had a lower oxidation number than the direct bonding NiMn/NPC catalyst.

- The results of extended X-ray absorption fine structure (EXAFS) analysis of Ni phthalocyanine, Ni foil, bimetallic single atom (Ni and Mn) catalysts (indirect-bonding (non-bonding) NiMn/NPC and direct bonding NiMn/NPC) and monometallic single-atom catalysts (Ni/NPC), and the results of EXAFS analysis of Mn phthalocyanine, Mn foil, bimetallic single atom (Ni and Mn) catalysts (indirect-bonding (non-bonding) NiMn/NPC and direct bonding NiMn/NPC), and monometallic single-atom catalysts (Mn/NPC) are shown in FIGS. 7A and 7B, respectively.

As can be seen from FIGS. 7A and 7B, all the indirect-bonding (non-bonding) NiMn/NPC catalyst, direct bonding NiMn/NPC catalyst, and Ni/NPC catalyst exhibited Ni-N peaks in the Ni K-edge Fourier-transformed (FT) k3-weighted EXAFS spectrum, which indicates that Ni exists in the form of a single atom bonded to N. However, in the direct bonding NiMn/NPC catalyst, an additional Ni-metal peak was observed, which supports that Ni and Mn are directly bonded to each other.

Similarly, in the Mn FT-EXAFS spectrum, all the indirect-bonding (non-bonding) NiMn/NPC catalyst, the direct bonding NiMn/NPC catalyst, and the Mn/NPC catalyst are present as single atoms in which Mn is bonded to N. On the other hand, the direct bonding NiMn/NPC catalyst exhibited a Mn-metal peak, which means that Ni and Mn are bonded directly to each other.

The results of XANES and EXAFS analysis according to FIGS. 6 and 7 showed that, in the NiMn/NPC catalyst according to Example 1, Ni and Mn are indirectly linked to each other and electrically interact from each other, while in the NiMn/NPC catalyst according to Comparative Example 1, Ni and Mn are directly linked to each other and electrically interact with each other. It is considered that such different bonding structures between single-atom metals cause a difference in the degree of deformation of the electronic structure (or configuration) of the Ni-N site, which is the main active site for CO formation, thus affecting the carbon dioxide conversion performance.

## Electrochemical performance evaluation

- The Faraday efficiency of each of carbon monoxide generation of bimetallic single atom (Ni and Mn) catalysts (indirect-bonding (non-bonding) NiMn/NPC and direct bonding NiMn/NPC), monometallic single-atom catalysts (Ni/NPC and Mn/NPC) and a commercial Ag/C catalyst was measured and the results are shown in FIG. 8A.

As can be seen from FIG. 8A, the indirect-bonding (non-bonding) NiMn/NPC catalyst according to Example 1 had a Faraday efficiency (Feco) of 98.3% at -0.397 V (vs RHE) and 95% or more at -0.257 to -0.464 V (vs RHE), and thus had the highest Faraday efficiency for CO production at a low voltage, as compared to Comparative Example 1 (direct bonding NiMn/NPC catalyst), Comparative Example 2 (Ni/NPC catalyst), Comparative Example 3 (Mn/NPC catalyst), and Comparative Example 4 (commercial Ag/C catalyst).

In this regard, it is considered that the Ni/NPC catalyst exhibited a low reaction rate when *COOH intermediates are formed during the carbon dioxide reduction (i.e., activation of carbon dioxide is difficult in Reaction Equation 3). Meanwhile, the Mn/NPC catalyst appears to exhibit the lowest Faraday efficiency because the Mn single atom has a low carbon dioxide reduction activity. Furthermore, the indirect-bonding NiMn/NPC catalyst exhibited better CO selectivity than the commercial Ag/C catalyst.

Moreover, it should be noted that the indirect-bonding NiMn/NPC catalyst, compared to the direct bonding NiMn/NPC catalyst, exhibited improved catalytic performance despite containing both Ni and Mn. This is because the electronic structure has changed differently depending on the manner or form in which Ni and Mn are bonded to each other.

The current density for carbon monoxide production of each of the bimetallic single atom (Ni and Mn) catalysts (indirect-bonding (non-bonding) NiMn/NPC and direct bonding NiMn/NPC), the monometallic single-atom catalysts (Ni/NPC and Mn/NPC) and the commercial Ag/C catalyst is shown in FIG. 8B.

Referring to FIG. 8B, the indirect-bonding (non-bonding) NiMn/NPC catalyst exhibited the lowest applied voltage at the current density for the same amount of CO production. Specifically, the applied voltage at a current density of -200 $mA/cm^2$ increases in the order of the indirect-bonding NiMn/NPC catalyst (-0.34 V), the direct bonding NiMn/NPC catalyst (-0.36 V), Ni/NPC catalyst (-0.40 V), and the commercial Ag/C catalyst (-0.66 V), which supports the fact that the indirect-bonding NiMn/NPC catalyst has a high CO production rate even under low voltage conditions.

Considering the results of the catalyst characterization, the indirect-bonding (non-bonding) NiMn/NPC catalyst had a structure in which Ni and Mn simultaneously exist in the form of single atoms and are indirectly linked to each other through a bond with an N atom, which is structurally different from the direct bonding NiMn/NPC catalyst having a structure in which Ni and Mn are directly bonded to each other. It is supposed that the indirect-bonding NiMn/NPC catalyst facilitates the carbon dioxide conversion by effectively controlling the electronic structure or configuration through electrical interaction.

- Tafel plots for carbon monoxide production of each of the bimetallic single atom (Ni and Mn) catalysts (indirect-bonding (non-bonding) NiMn/NPC and direct bonding NiMn/NPC) and the commercial Ag/C catalyst are shown in FIG. 9.

As can be seen from FIG. 9, the slope of the Tafel plot of the indirect-bonding NiMn/NPC catalyst was significantly lower than that of the direct bonding NiMn/NPC catalyst and the commercial Ag/C. These results mean that when Ni and Mn atoms are indirectly linked to each other, a more efficient catalytic reaction pathway is established, thereby promoting the carbon dioxide conversion.

The transition metal single-atom catalyst according to an embodiment of the present disclosure includes two types of transition metals (a first transition metal ($M_1$) and a second transition metal ($M_2$)) bonded with nitrogen in a nitrogen-doped carbon nanostructure such that they are adjacent to each other in the form of single atoms and are

loaded in an indirect bonding manner, thereby exhibiting better carbon dioxide conversion performance (low overpotential, high current density and high selectivity for carbon monoxide), compared to the monometallic single-atom catalyst as well as the single atom catalyst in which two types of transition metals are directly bonded to each other. In addition, the transition metal single-atom catalyst according to an embodiment of the present disclosure exhibits improved electrochemical catalytic activity in the carbon dioxide reduction, compared to commercial noble metal catalysts despite using inexpensive transition metals or base metals, thus being advantageous in terms of economic feasibility. Furthermore, the single atom catalyst according to the present embodiment can be prepared by a simple procedure such as ion adsorption and is applied to an electrode (i.e., cathode) of an electrochemical system for carbon dioxide reduction to reduce carbon dioxide and at the same time to effectively produce a high value-added compound (for example, carbon monoxide, which is a constituent of synthesis gas (or syngas)).

It should be understood that simple modifications and variations of the present disclosure may be easily used by those skilled in the art, and such modifications or variations may fall within the scope of the present disclosure.

## Claims

**1.** An electrochemical catalyst comprising:

a nitrogen-doped carbon nanostructure; and
a first transition metal, or $M_1$, and a second transition metal, or $M_2$, in the form of single atoms loaded in the nitrogen-doped carbon nanostructure,
wherein the electrochemical catalyst comprises an $M_1$-$N_x$ moiety and an $M_2$-$N_x$ moiety having a structure in which the first transition metal and the second transition metal are each bonded to a nitrogen atom of the nitrogen-doped carbon nanostructure,
wherein $N_x$ represents a nitrogen atom having coordination ability, and wherein the first transition metal and the second transition metal are indirectly linked to each other.

**2.** The electrochemical catalyst according to claim 1, wherein the first transition metal and the second transition metal form a linkage of $M_1$-$N_x$-$N_x$-$M_2$ in which the $M_1$-$N_x$ moiety is linked to the $M_2$-$N_x$ moiety.

**3.** The electrochemical catalyst according to claim 1 or 2, wherein the first transition metal is at least one selected from the group consisting of nickel (Ni), iron (Fe), silver (Ag), copper (Cu), cobalt (Co), and zinc (Zn), and
the second transition metal is at least one selected from the group consisting of manganese (Mn), molybdenum (Mo), titanium (Ti), vanadium (V), chromium (Cr), niobium (Nb), zirconium (Zr), and cadmium (Cd).

**4.** The electrochemical catalyst according to any of claims 1 to 3, wherein the first transition metal is nickel (Ni) and the second transition metal is manganese (Mn).

**5.** The electrochemical catalyst according to any of claims 1 to 4, wherein a content of the first transition metal and a content of the second transition metal in the catalyst are in a range of 0.1 to 1 wt% and 0.05 to 0.8 wt%, respectively, and
an atomic ratio of the first transition metal to the second transition metal is in a range of about 1:0.2 to about 1:1.

**6.** The electrochemical catalyst according to any of claims 1 to 5, wherein the catalyst has a specific surface area (BET) of at least 400 $m^2/g$.

**7.** The electrochemical catalyst according to any of claims 1 to 6, wherein a content of the nitrogen-doped carbon nanostructure is in a range of 1 to 12 at%.

**8.** A method of preparing an electrochemical catalyst, comprising:

a) thermally decomposing a carbon precursor under an inert atmosphere at a first heat treatment temperature to prepare porous carbon;
b) bringing into contact the porous carbon with a nitrogen source to form a nitrogen source-porous carbon composite;
c) adsorbing a precursor of a first transition metal, $M_1$, and a precursor of a second transition metal, $M_2$, onto the nitrogen source-porous carbon composite; and
d) thermally decomposing the nitrogen source-porous carbon composite on which the first transition metal and

the second transition metal are adsorbed under an inert atmosphere at a second heat treatment temperature, to load the first transition metal and the second transition metal in the form of single atoms in the nitrogen-doped carbon nanostructure,
wherein the electrochemical catalyst comprises an $M_1$-$N_x$ moiety and an $M_2$-$N_x$ moiety having a structure in which the first transition metal and the second transition metal are each bonded to a nitrogen atom of the nitrogen-doped carbon nanostructure,
wherein $N_x$ represents a nitrogen atom having coordination ability, and
wherein the first transition metal and the second transition metal are indirectly linked to each other.

**9.** The method according to claim 8, wherein the first heat treatment temperature in the operation a) is in a range of 400 to 1,000 °C and the thermal decomposition time is in a range of at least 0.1 hour.

**10.** The method according to claim 8 or 9, wherein the nitrogen source comprises at least one selected from the group consisting of urea, melamine, ammonia, polyamide imide resins, adenine, pyrrole, polypyrrole, polyvinylpyrrole, 3-methylpolypyrrole, acrylonitrile, polyacrylonitrile, phenanthroline, polyacrylonitrile-polymethacrylic acid copolymers, pyrazole, vinylpyridine, polyvinylpyridine, pyrimidine, piperazine, pyran, carbamide, morpholine, imidazole, 1-methylimidazole, 2-methylimidazole, quinoxaline, aniline, polyaniline, polyimide, benzoimidazole, polybenzoimidazole, polyamide, ethylenediamine and cyanamide.

**11.** The method according to any of claims 8 to 10, wherein the second heat treatment temperature in the operation d) is in a range of 700 to 1,000 °C and the thermal decomposition time is in a range of 8 hours or less.

**12.** The method according to claims 8 to 11, wherein the carbon precursor is at least one selected from the group consisting of sodium citrate, potassium citrate, glucose carbonate, ammonium citrate, calcium citrate, sodium gluconate, potassium gluconate, sodium alginate, potassium alginate and hydrates thereof.

**13.** An electrode for carbon dioxide reduction comprising:

an electrode substrate; and
a single atomic metal catalyst loaded on the electrode substrate,
wherein the single atomic metal catalyst is an electrochemical catalyst comprising: (i) a nitrogen-doped carbon nanostructure, and (ii) a first transition metal, or $M_1$, and a second transition metal, or $M_2$, in the form of single atoms loaded in the nitrogen-doped carbon nanostructure,
wherein the electrochemical catalyst comprises an $M_1$-$N_x$ moiety and an $M_2$-$N_x$ moiety having a structure in which the first transition metal and the second transition metal are each bonded to a nitrogen atom of the nitrogen-doped carbon nanostructure,
wherein $N_x$ represents a nitrogen atom having coordination ability, and
wherein the first transition metal and the second transition metal are indirectly linked to each other.

**14.** A carbon dioxide reduction system comprising:

an anode and a cathode as electrochemical electrodes electrically connected to an external power source, and an aqueous electrolyte filled between the anode and the cathode,
wherein, upon application of a voltage from the external power source, oxygen is generated at the anode and carbon monoxide is generated at the cathode,
wherein the cathode comprises a single atomic metal catalyst loaded on an electrode substrate, and the single atomic metal catalyst comprises (i) a nitrogen-doped carbon nanostructure, and (ii) a first transition metal, or $M_1$, and a second transition metal, or $M_2$, in the form of single atoms loaded in the nitrogen-doped carbon nanostructure,
wherein the electrochemical catalyst comprises an $M_1$-$N_x$ moiety and an $M_2$-$N_x$ moiety having a structure in which the first transition metal and the second transition metal are each bonded to a nitrogen atom of the nitrogen-doped carbon nanostructure,
wherein $N_x$ represents a nitrogen atom having coordination ability, and
wherein the first transition metal and the second transition metal are indirectly linked to each other.

**15.** An electrochemical catalyst comprising:

a nitrogen-doped carbon nanostructure; and

single atoms of a first transition metal and a second transition metal loaded in the nitrogen-doped carbon nanostructure;
wherein the single atoms of the first and second transition metals are bonded to different nitrogen atoms of the nitrogen-doped carbon nanostructure.

Fig. 1

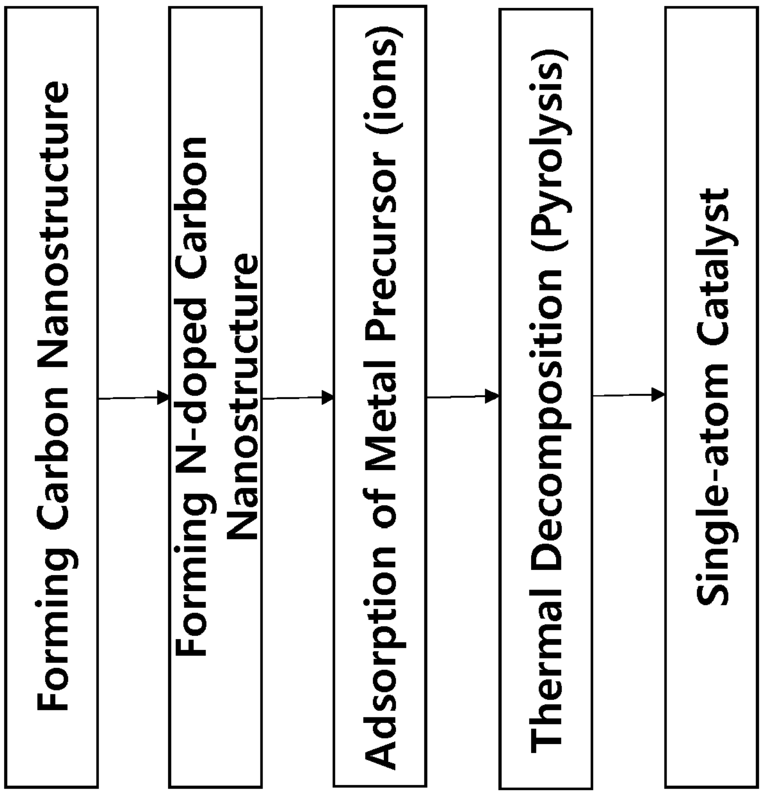
Forming Carbon Nanostructure
Forming N-doped Carbon Nanostructure
Adsorption of Metal Precursor (ions)
Thermal Decomposition (Pyrolysis)
Single-atom Catalyst

Fig. 2

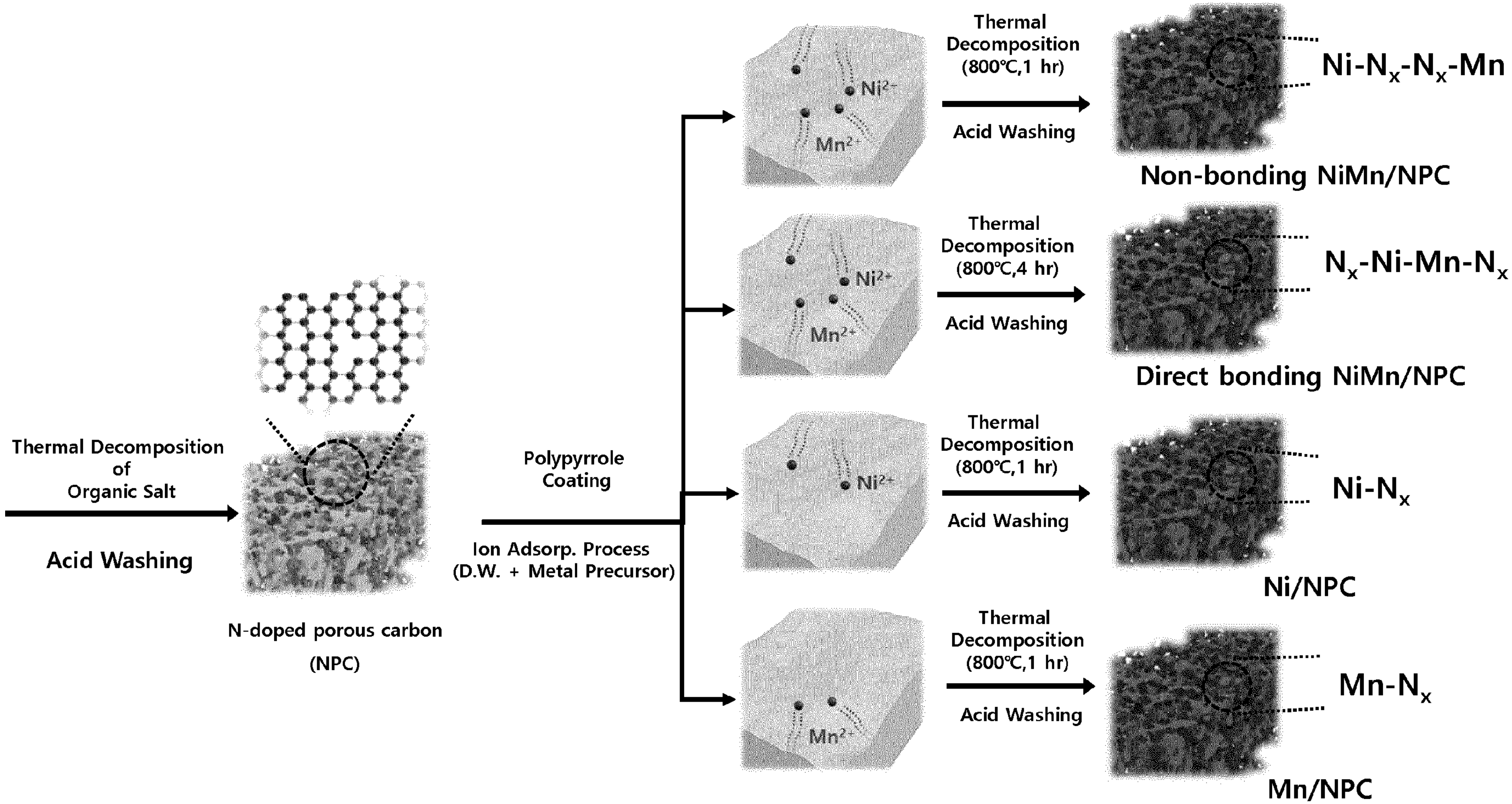
Thermal Decomposition of Organic Salt
Acid Washing
N-doped porous carbon (NPC)
Polypyrrole Coating
Ion Adsorp. Process (D.W. + Metal Precursor)
Ni2+
Mn2+
Thermal Decomposition (800℃,1 hr)
Acid Washing
Ni-Nx-Nx-Mn
Non-bonding NiMn/NPC
Thermal Decomposition (800℃,4 hr)
Acid Washing
Nx-Ni-Mn-Nx
Direct bonding NiMn/NPC
Thermal Decomposition (800℃,1 hr)
Acid Washing
Ni-Nx
Ni/NPC
Thermal Decomposition (800℃,1 hr)
Acid Washing
Mn-Nx
Mn/NPC

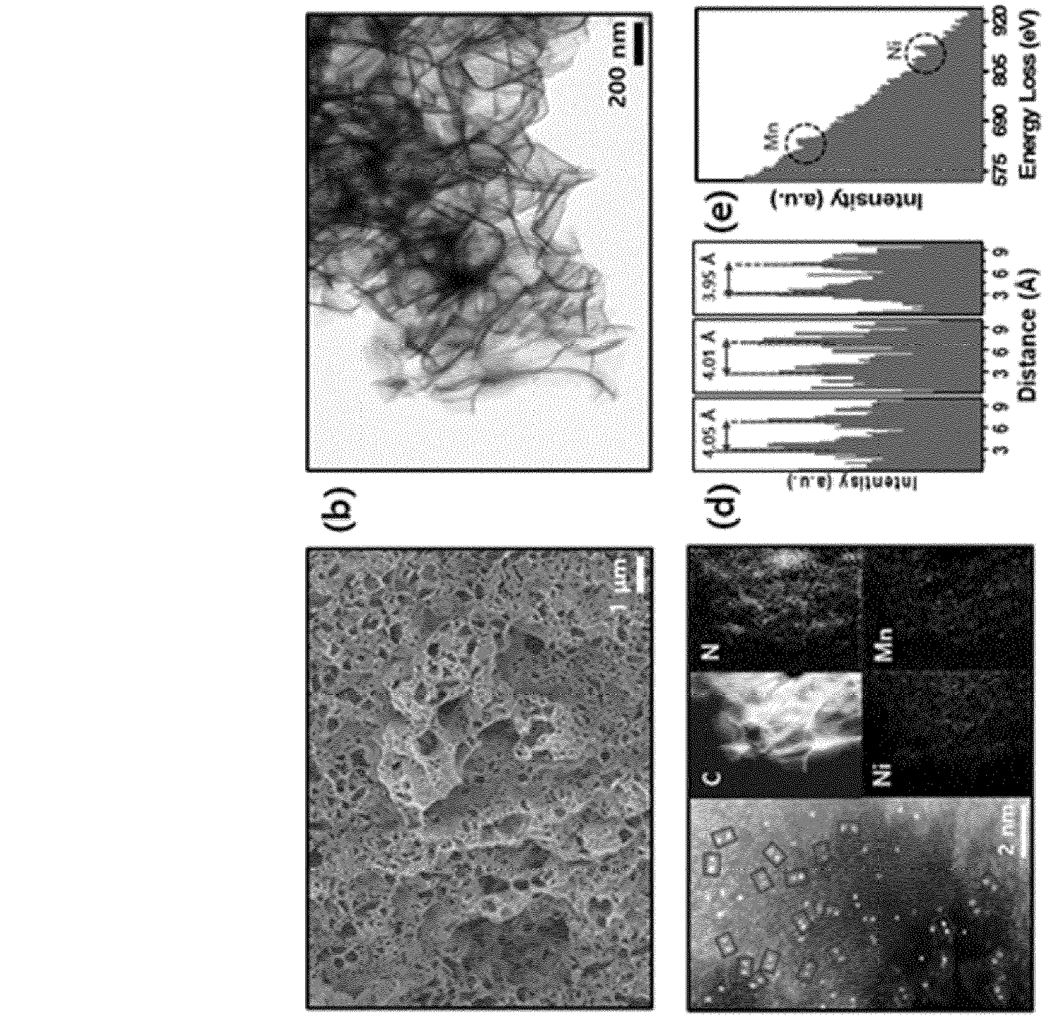
(a)
1 µm
(b)
200 nm
(c)
C
N
Ni
Mn
2 nm
(d)
4.05 A
4.01 A
3.95 A
Intensity (a.u.)
3 6 9
Distance (A)
(e)
Mn
Ni
Intensity (a.u.)
575 690 805 920
Energy Loss (eV)

Fig. 3

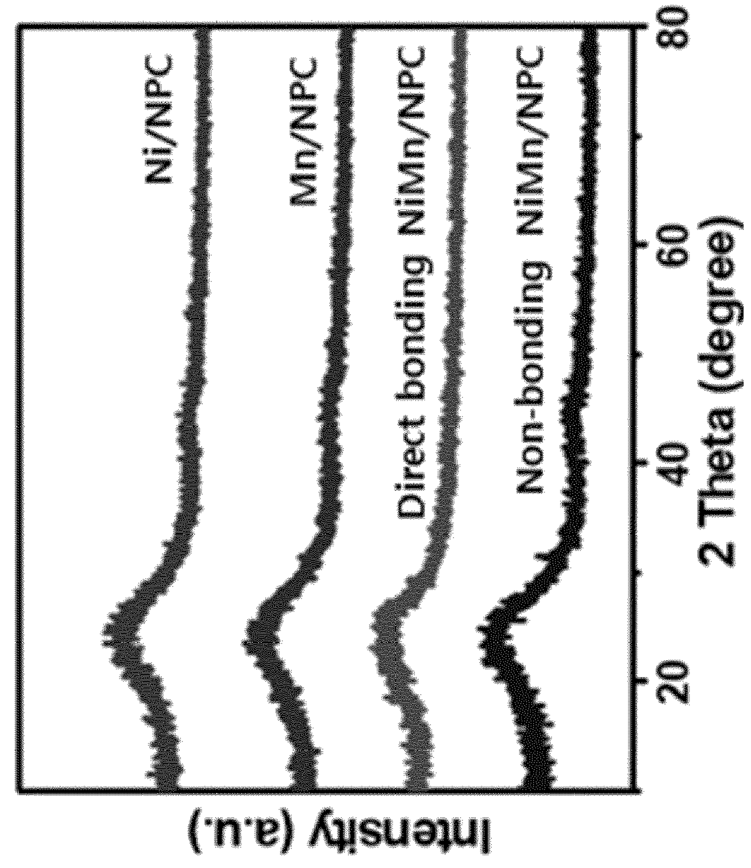
Ni/NPC
Mn/NPC
Direct bonding NiMn/NPC
Non-bonding NiMn/NPC
20
40
60
80
2 Theta (degree)
Intensity (a.u.)

Fig. 4

Fig. 5

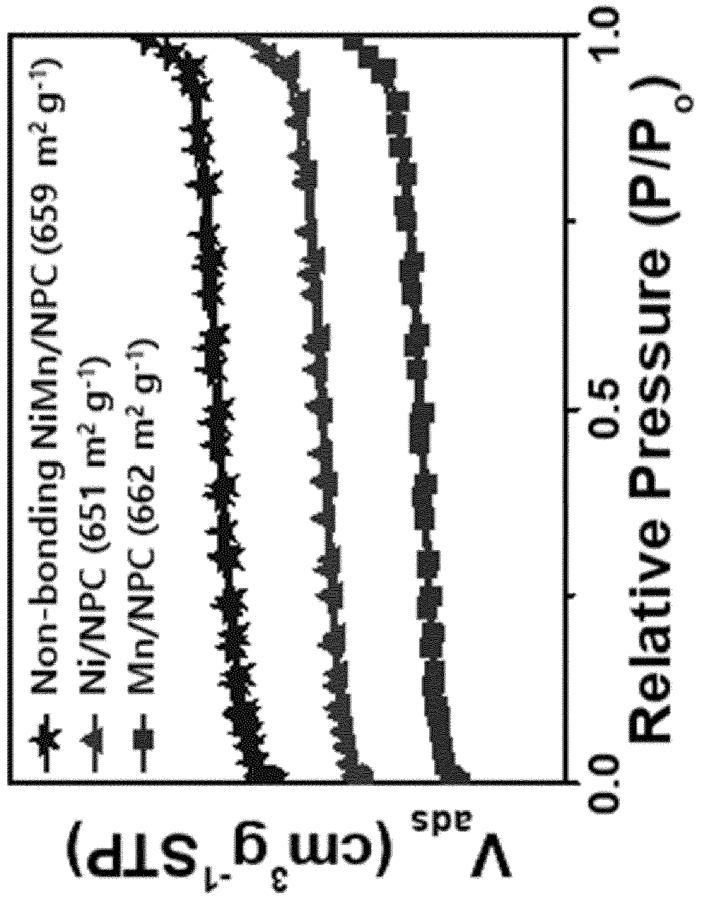
Non-bonding NiMn/NPC (659 m2 g-1)
Ni/NPC (651 m2 g-1)
Mn/NPC (662 m2 g-1)
Vads (cm3g-1STP)
0.0
0.5
1.0
Relative Pressure (P/Po)

Fig. 6

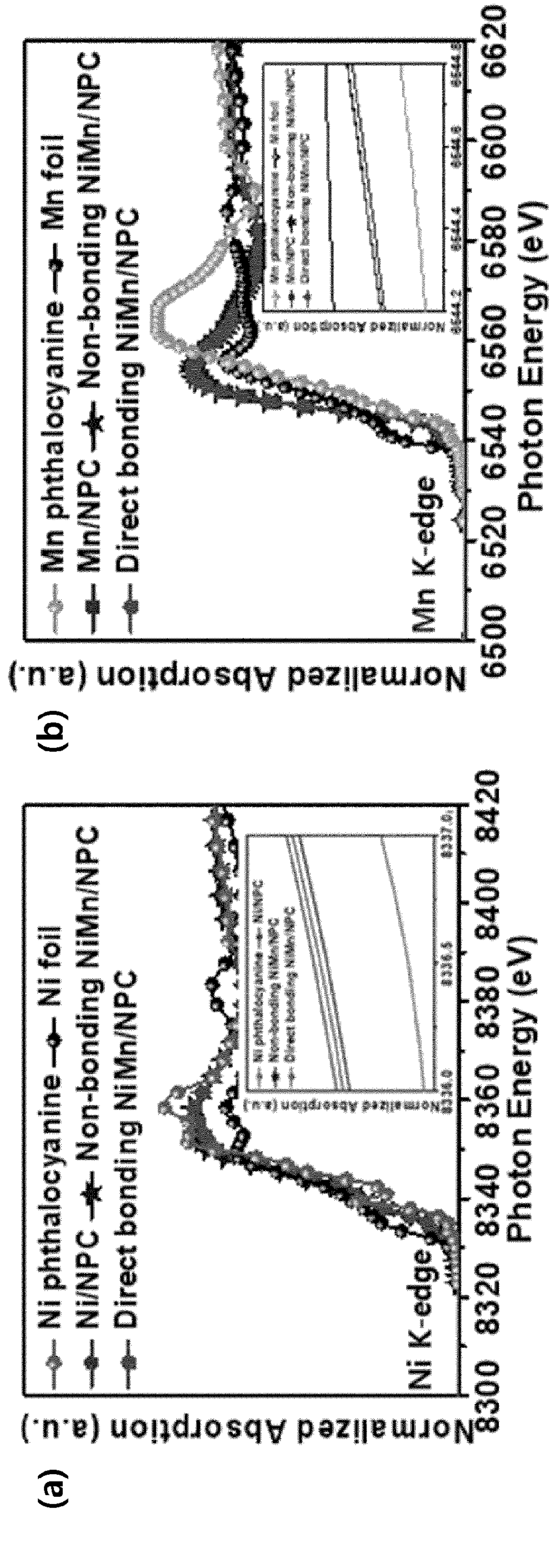
(a)
Ni phthalocyanine
Ni foil
Ni/NPC
Non-bonding NiMn/NPC
Direct bonding NiMn/NPC
Ni K-edge
Normalized Absorption (a.u.)
Photon Energy (eV)
8300
8320
8340
8360
8380
8400
8420
(b)
Mn phthalocyanine
Mn foil
Mn/NPC
Non-bonding NiMn/NPC
Direct bonding NiMn/NPC
Mn K-edge
Normalized Absorption (a.u.)
Photon Energy (eV)
6500
6520
6540
6560
6580
6600
6620

Fig. 7

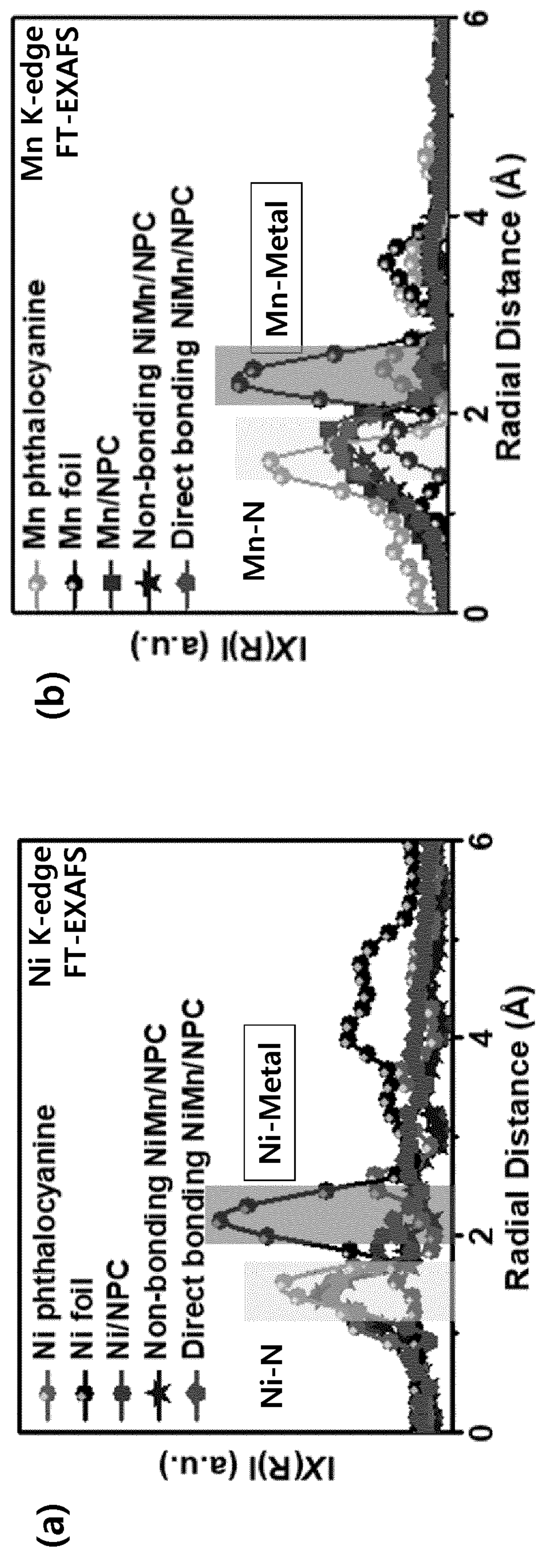
(a)
Ni phthalocyanine
Ni foil
Ni/NPC
Non-bonding NiMn/NPC
Direct bonding NiMn/NPC
Ni K-edge
FT-EXAFS
Ni-N
Ni-Metal
|X(R)| (a.u.)
Radial Distance (Å)
0
2
4
6
(b)
Mn phthalocyanine
Mn foil
Mn/NPC
Non-bonding NiMn/NPC
Direct bonding NiMn/NPC
Mn K-edge
FT-EXAFS
Mn-N
Mn-Metal
|X(R)| (a.u.)
Radial Distance (Å)
0
2
4
6

Fig. 8

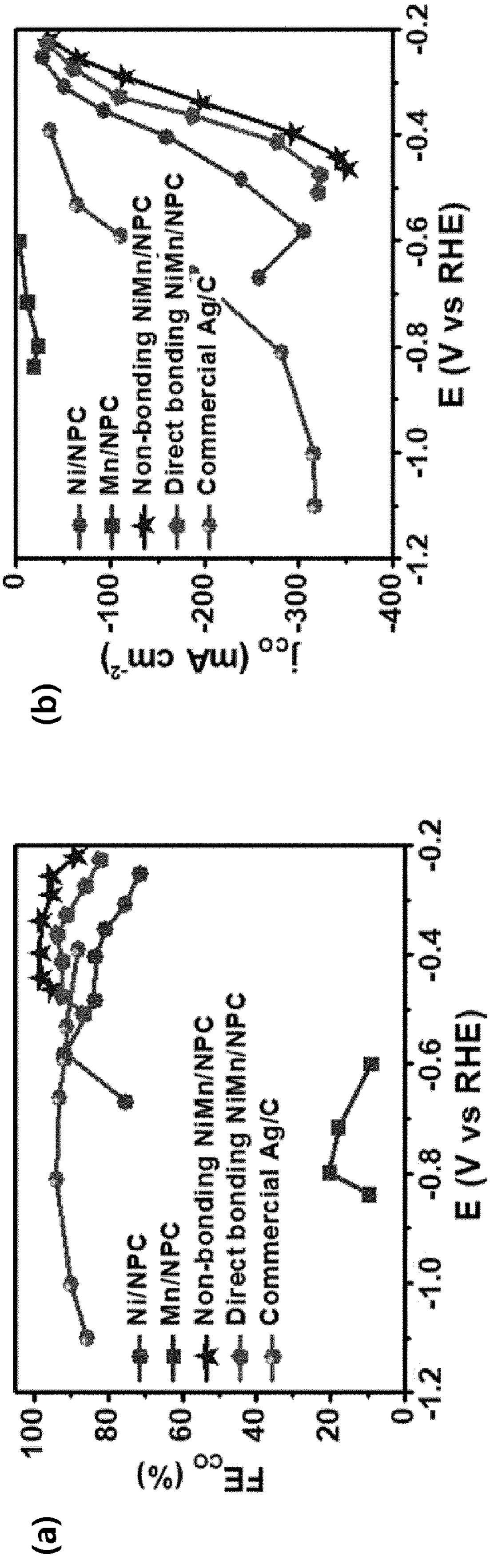
(a)
$FE_{CO}$ (%)
E (V vs RHE)
Ni/NPC
Mn/NPC
Non-bonding NiMn/NPC
Direct bonding NiMn/NPC
Commercial Ag/C
(b)
$j_{CO}$ (mA cm$^{-2}$)
E (V vs RHE)
Ni/NPC
Mn/NPC
Non-bonding NiMn/NPC
Direct bonding NiMn/NPC
Commercial Ag/C

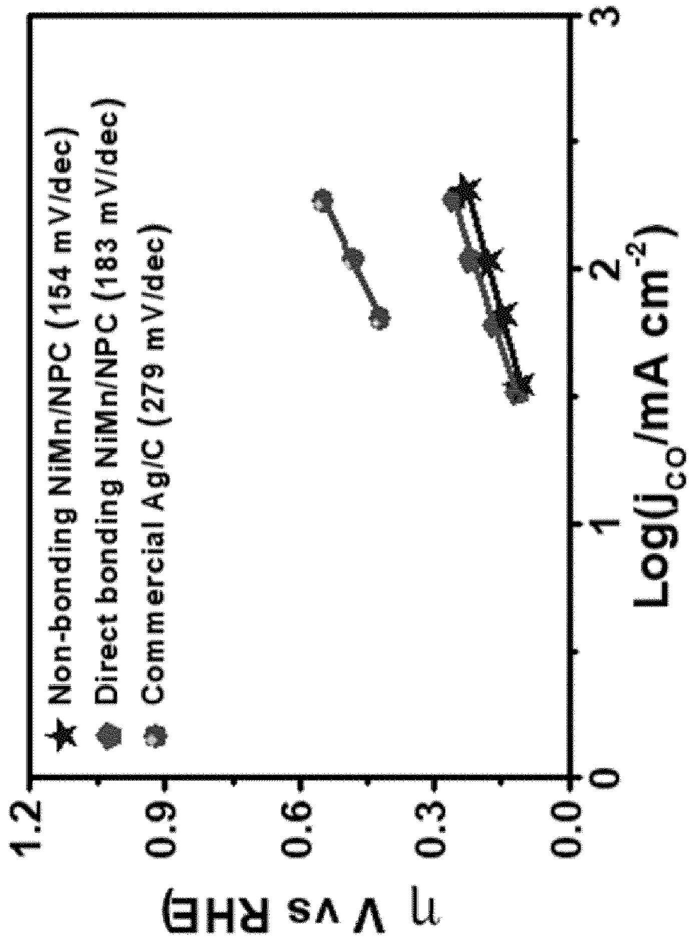
Non-bonding NiMn/NPC (154 mV/dec)
Direct bonding NiMn/NPC (183 mV/dec)
Commercial Ag/C (279 mV/dec)
η V vs RHE
1.2
0.9
0.6
0.3
0.0
0
1
2
3
Log(j$_{CO}$/mA cm$^{-2}$)

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *J. Phys. Chem. C,* 2013, vol. 117, 9187-9195
- *Angew. Chem. Int. Ed.,* 2015, vol. 54, 10758-10762